# EUROPÄISCHE PATENTSCHRIFT

(11) **EP 2 007 993 B1**
(45) Veröffentlichungstag und Bekanntmachung des Hinweises auf die Patenterteilung: **29.04.2015**
(21) Anmeldenummer: 07726950.4
(22) Anmeldetag: 15.03.2007
(51) Int. Cl.: F16C 17/00

(54) **ELEKTRISCHE MASCHINE MIT MAGNETLAGER UND FANGLAGER**
ELECTRICAL MACHINE WITH MAGNETIC BEARING AND SAFETY BEARING
MOTEUR ÉLECTRIQUE AVEC PALIER MAGNÉTIQUE ET PALIER D'ÉQUILIBRAGE

(30) Priorität: 18.04.2006 DE 102006017933
(43) Veröffentlichungstag der Anmeldung: 31.12.2008
(73) Patentinhaber: Siemens Aktiengesellschaft, 80333 München (DE)
(72) Erfinder: MENZ, Ingo, 14057 Berlin (DE); PETEREIT, Peter, 12555 Berlin (DE); SIEGL, Günther, 13439 Berlin (DE)
(86) Internationale Anmeldenummer: PCT/EP2007/052462
(87) Internationale Veröffentlichungsnummer: WO 2007/122044

(56) Entgegenhaltungen:
- EP-A1- 1 083 349
- FR-A- 1 016 068
- FR-A1- 2 614 375
- JP-A- 2004 132 513
- US-A1- 2004 189 124

## Beschreibung

Die Erfindung betrifft eine elektrische Maschine nach dem Oberbegriff von Patentanspruch 1.

Magnetlager setzen sich bei elektrischen Maschinen immer mehr durch, weil an ihnen keine Reibungsverluste wie an mechanischen Lagern auftreten. Magnetlager haben jedoch den Nachteil, dass es durch Störungen zu ihrem Ausfall kommen kann. (Der einfachste Störungsfall ist ein herkömmlicher Stromausfall.) Falls die Störung während des Betriebs der elektrischen Maschine erfolgt, dreht sich die Welle der elektrischen Maschine noch mit höher Geschwindigkeit, wenn das Magnetlager ausfällt. Es ist daher notwendig, so genannte Fanglager vorzusehen, die die Welle im Falle eines Ausfalls der Magnetlager auffangen und wenigstens so lange zu führen im Stande sind, wie der Übergang vom Bewegungszustand der Welle in einen Stillstand erfolgt.

Ein erster Ansatzpunkt im Stand der Technik zur Ausgestaltung der Fanglager bestand darin, im Wesentlichen herkömmliche Wälzlager zu verwenden. Hierbei ist die Welle in dem Wälzlager mit Spiel geführt, wobei sie üblicherweise durch das Magnetlager geführt ist und das Wälzlager als Fanglager erst dann arbeitet, wenn das Magnetlager ausfällt. Wälzlager sind insbesondere bei kleinen elektrischen Maschinen erfolgreich, bei denen die Welle kein großes Gewicht hat. Wälzlager haben den Vorteil, dass der so genannte "Backward whirl" unterdrückt wird, eine Drehung der gesamten Welle in umgekehrter Drehrichtung zu der ihr aufgeprägten Drehung um ihre Drehachse.

Wälzlager sind nicht geeignet, große, schwere Rotoren aufzufangen: Zwischen Wälzkörpern und Lägerringen besteht nur Punkt- oder Linienkontakt, woraus sehr hohe Flächenpressungen resultieren. Diese hohen Belastungen können die Wälzkörper beschädigen und das Lager blockieren. Bei großen, schweren Wellen, wie sie zum Beispiel in Turbokompressoren bei der Gasförderung eingesetzt werden, werden als Fanglager gegenwärtig Trockengleitlager verwendet. Trockengleitlager bestehen im Wesentlichen aus einem an dem Stator montierten Ring, in dem sich die Welle dann bei Ausfall der Magnetlager drehen kann. Da die Gefahr des Backward Whirls mit zunehmendem Reibbeiwert zwischen Welle und Fanglager steigt, versucht man durch Auswahl geeigneter Werkstoffe für diesen Ring, den Reibbeiwert zu minimieren. Als Reibbeläge werden beispielsweise spezielle Bronzelegierungen verwendet, die aber starkem Verschleiß unterliegen.

Das Problem des Verschleißes bei einem Trockengleitlager wird im U.S. Patent 5,739,609 dadurch gelöst, dass der Ring zweigeteilt ist: Ein Teilring wird an dem Stator befestigt, und ein zweiter Teilring wird in dem ersten Teilring befestigt. Bei Verschleiß an der Innenfläche kann dann der zweite Teilring ausgetauscht werden. Ein Gleitmittel ist hierbei verwendet, um das Austauschen des zweiten Teilrings zu erleichtern. Der zweite Teilring bleibt jedoch im Betrieb starr zu dem ersten Teilring, der an dem Stator befestigt ist, sodass sich an der Funktionsweise als Trockengleitlager grundsätzlich nichts ändert.

Die US 2004/0189124 A1 offenbart ein axiallast-belastbares Fanglager.

Die FR 2 614 375 A1 offenbart ein radiales Fanglager für Magnetlager.

Es ist Aufgabe der Erfindung, ein Fanglager, insbesondere auch für große, schwere Wellen, bereitzustellen, bei dem der Backward Whirl vermieden wird, und das keinem starken Verschleiß unterliegt.

Die Aufgabe wird durch den Gegenstand des Patentanspruchs 1 gelöst. Erfindungsgemäß umfasst also das Fanglager der elektrischen Maschine einen an dem Stator montierten Außenring, in dem ein drehbarer Ring gleitend geführt ist.

Der drehbare Ring bewegt sich bei einem Ausfall der Magnetlager auf Grund der Übertragung einer Kraft bzw. eines Drehmoments von der Welle und bewirkt damit, dass die Welle nicht in unkontrollierter Weise beliebige Bewegungen vollführen kann, sodass der Backward Whirl unterdrückt ist. Der drehbare Ring ist gleitend mit geringer Reibung geführt. Die Reibwerte der Anordnung sind somit insgesamt gering. (Eine Rollreibungskraft ist herkömmlicherweise vergleichsweise klein.) Dadurch, dass die Kräfte nicht punktuell oder an einzelnen Linien übertragen werden, sondern über die gesamte Innen- und Außenfläche des Rings, hat das Fanglager eine hohe Tragfähigkeit und eignet sich besonders bei der Verwendung von großen, schweren Wellen. Das Fanglager weist einen Außenring auf, der über Feder- und Dämpferelemente an dem Stator montiert ist.

Gemäß der Erfindung ist der drehbare Ring ein Zwischenring. Der Zwischenring umgibt einen weiteren Ring, der in ihn gleitend geführt ist. Es kann sich hierbei abermals um einen Zwischenring handeln oder direkt um einen Innenring, der die Welle mit radialem Spiel umgibt. Die Verwendung von einem oder mehreren Zwischenringen hat den Vorteil, dass bei einer Störung der gleitenden Führung an einer Zwischenstelle (z. B. zwischen Zwischenring und Außenring) noch eine weitere Möglichkeit zur gleitenden Führung bestehen bleibt (im Beispiel zwischen Innenring und Zwischenring). In dem U-förmigen Profil des Außenrings ist zunächst der Zwischenring angeordnet, der gleitend vermittels eines Gleitmittels in dem Außenring geführt ist.

Gemäß der Erfindung weist der Außenring ein U-förmiges Profil auf. Ein Schenkel des "U"s ist hierbei abnehmbar. Mit anderen Worten ist der Schenkel des U-Profils durch einen abnehmbaren ringförmigen Steg gebildet. Die Abnehmbarkeit ist schon deswegen erforderlich, damit der Innenring und gegebenenfalls der Zwischenring in das U-förmige Profil eingebracht werden kann. Das U-förmige Profil ermöglicht insbesondere das Einbringen eines Gleitmittels, kann aber auch für den Fall der Verwendung der oben genannten Gleitschicht deswegen sinnvoll sein, weil es auf jeden Fall ein axiales Ausreißen des Innenrings bzw. des Zwischenrings mit seinen Schenkeln verhindert (und damit auch z.B. ein Verkippen des Innenrings). Der Winkel zwischen den beiden Schenkeln des "U"s im U-Profil und dem Boden des "U"s muss hierbei nicht notwendigerweise 90° betragen, sondern die Schenkel können auch beispielsweise etwas weiter geöffnet sein, um so Öffnungswinkel von 100° bis 110° bereitzustellen.

Bei einer ersten Ausführungsform ist der drehbare Ring ein Innenring, der die Welle mit radialem Spiel umgibt. Bei Ausfall der Magnetlager fällt die Welle unter der Wirkung der Gravitation nach unten, liegt dann im unteren Bereich des Innenrings an und kann entsprechend Kräfte bzw. Drehmomente übertragen.

Bei einer bevorzugten Ausführungsform erfolgt die gleitende Führung reibungsarm, und zwar dadurch, dass ein Gleitmittel zwischen den Ringen eingesetzt wird oder die Ringe mit einer Gleitschicht versehen sind. Im letzteren Fall genügt es, die Innenseite des Außenrings und die Außenseite des Innenrings und gegebenenfalls den Zwischenring innen und außen mit einer Gleitschicht zu versehen. Eine solche Schicht kann beispielsweise aus Teflon bestehen oder eine spezielle galvanische Beschichtung sein. Als Gleitmittel kann im Falle der anderen Alternative herkömmliches Fett oder Graphit verwendet werden.

Nachfolgend wird eine bevorzugte Ausführungsform der Erfindung unter Bezug auf die Zeichnung beschrieben, in der:
- FIG 1 A: schematisch eine seitliche Schnittansicht einer ersten Ausführungsform der Erfindung ist,
- FIG 1 B: schematisch eine Schnittansicht senkrecht zur Schnittansicht gemäß FIG 1A ist,
- FIG 2 A: schematisch eine seitliche Schnittansicht einer zweiten Ausführungsform der Erfindung ist,
- FIG 2 B: schematisch eine Schnittansicht senkrecht zur Schnittansicht gemäß FIG 2A ist.

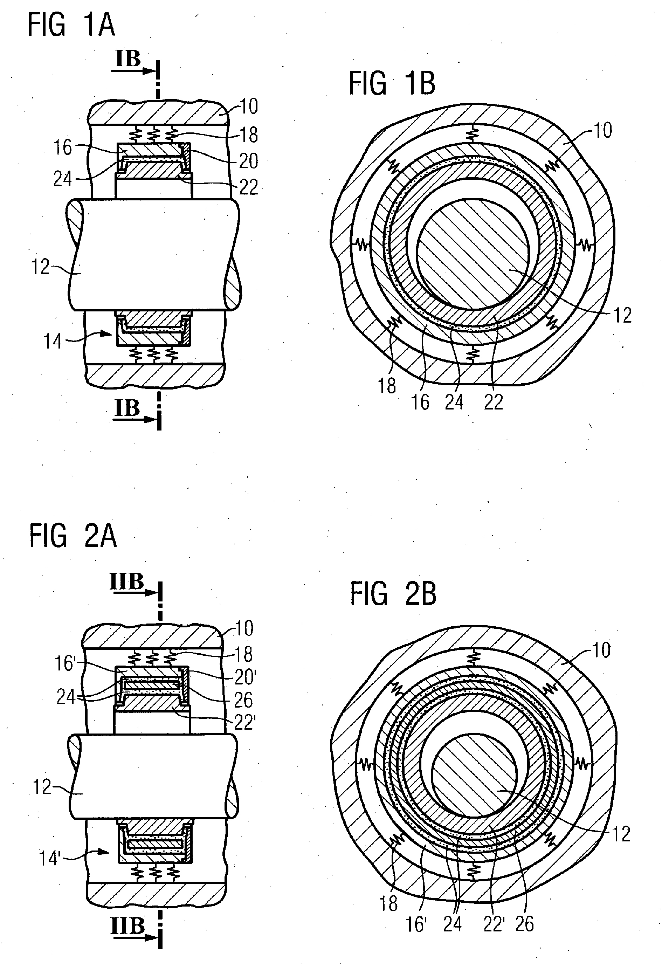

Eine erfindungsgemäße elektrische Maschine umfasst einen in den FIG nur schematisch angedeuteten Stator 10 und eine nur abschnittsweise dargestellte darin drehbare Welle 12. Im Betrieb wird die Welle 12 über (nicht gezeigte) Magnetlager geführt. Die Erfindung betrifft ein Fanglager, das dann zum Einsatz kommt, wenn das Magnetlager ausfällt. Das Fanglager fängt die Welle dann auf. Die Welle 12 ist in den FIG für den Fall des Ausfalls der Magnetlager dargestellt, indem sie durch die Gravitation nach unten fällt. Es wirkt dann einem Ganzen mit 14 bezeichnetes Fanglager. Das Fanglager weist einen Außenring 16 auf, der über in den FIG nur schematisch angedeutete Feder- und Dämpferelemente 18 an dem Stator 10 montiert ist. Der Außenring 16 ist von U-förmigem Profil. Ein Schenkel des U-förmigen Profils, der in der FIG 1A und der FIG 2A mit hervorgehobener Schraffur gekennzeichnet und mit 20 bezeichnet ist, ist abnehmbar und ermöglicht so das Einführen eines weiteren Rings in den Außenring 16.

Im Falle einer ersten Ausführungsform, die in FIG 1A und FIG 1B veranschaulicht ist, ist in dem Außenring 16 direkt ein Innenring 22 angeordnet. Zwischen Außenring 16 und Innenring 22 befindet sich ein Gleitmittel 24, beispielsweise herkömmliches Fett. Anstelle eines Gleitmittels 24 kann auch sowohl auf einer Innenfläche des Außenrings 16 als auch auf einer Außenfläche des Innenrings 22 eine Gleitschicht, z.B. aus Teflon, vorgesehen sein. Der Innenring 22 ist vorliegend als von T-förmigem Profil gezeigt, wobei ein Fuß des "T"s (nicht eigens bezeichnet) nach außen weist und zwischen die beiden Schenkel des U-Profils des Außenrings 16 eingreift. Dieses Eingreifen ist naturgemäß nur dadurch ermöglicht, dass der Innenring zuvor bei abgenommenem Ring 20 eingeschoben wird, wobei der Ring 20 dann nachfolgend wieder an dem restlichen Außenring 16 befestigt wurde.

Wie insbesondere in FIG 1B gut zu erkennen, fällt die Welle 12 im Falle des Ausfalls der Magnetlager direkt auf den Innenring 22. Die Welle, die dann in Drehung begriffen sein kann, überträgt ein Drehmoment auf den Innenring 22, der sich nach dem Prinzip von Wirkung und Gegenwirkung dann so dreht, dass die Gesamtanordnung möglichst stabil gehalten ist. Dadurch werden unkontrollierte Bewegungen der Welle 12 weitgehend vermieden. Die Federelemente 18 haben die Aufgabe, die Anfangsstoßkraft zu reduzieren.

Bei einer alternativen Ausführungsform, die in den FIG 2 A und 2 B veranschaulicht ist, ist in dem U-förmigen Profil des Außenrings 16' zunächst ein Zwischenring 26 angeordnet, der gleitend vermittels eines Gleitmittels 24 in dem Außenring 16' geführt ist. Der Zwischenring 26 umgibt einen Innenring 22', der ebenfalls gleitend geführt ist, und zwar in dem Innenring 26. (Es kann auch eine gleitende Führung gegenüber den Schenkeln des Außenrings 16' zusätzlich vorgesehen sein, wobei gegenüber der in FIG 2A dargestellten Ausführungsform dann das Gleitmittel 24 noch etwas weiter hinaus, zwischen Außenring 16' und Innenring 22', verbracht werden müsste.)

Wie in FIG 2B zu sehen, fällt auch hier die Welle 12 auf den Innenring 22' und überträgt ein Drehmoment auf diesen. Dieser dreht sich nun im Verhältnis zu dem Innenring 26. Es ist nun auch möglich, dass sich der Innenring 26 seinerseits gegenüber dem Außenring 16' dreht. Im Falle, dass die gleitende Führung zwischen dem Innenring 22' und dem Zwischenring 26 gestört ist, kommt es (nahezu) ausschließlich zu einer Drehung zwischen Zwischenring 26 und Außenring 16', wobei dann die Relativbewegung zwischen Inneriring 22' und Zwischenring 26 unterdrückt ist.

Den Ausführungsformen gemäß den FIG 1 A/1 B und FIG 2 A/2 B ist gemeinsam, dass die Kräfte über einen gesamten Ring verteilt wirken, sodass es nicht zu punktuellen Pressungen wie im Falle von Wälzlagern kommt. Gegenüber herkömmlichen Trockenlagern ist auf Grund der Tatsache, dass Rollbewegungen eingeleitet werden, weswegen der Hauptbeitrag zum Reibbeiwert der Rollwiderstand ist, die Reibung stark verringert. Der Innenring 22/22' unterliegt damit nur geringem Verschleiß.

## Patentansprüche

1. Elektrische Maschine, mit einem Stator (10) und einer darin drehbaren Welle (12), die über Magnetlager geführt ist, wobei für den Fall eines Ausfalls der Magnetlager Fanglager (14') bereitgestellt sind, die die Welle (12) dann auffangen und beim Übergang von deren Bewegung zu deren Stillstand führen, wobei das Fanglager (14') einen an dem Stator montierten Außenring (16') umfasst, in dem ein drehbarer Ring (22',26) gleitend geführt ist, wobei der Außenring (16') ein U-förmiges Profil aufweist und ein Schenkel des U-Profils durch einen abnehmbaren ringförmigen Steg (20') gebildet ist,
**dadurch gekennzeichnet,**
**dass** der Außenring (16') über Feder- und Dämpferelemente (18) an dem Stator (10) montiert ist, wobei der drehbare Ring ein Zwischenring (26) ist, in dem ein Innenring (22') gleitend geführt ist, der die Welle (12) mit radialem Spiel umgibt, wobei in dem U-Profil des Außenrings (16') zunächst der Zwischenring (26) angeordnet ist, der gleitend vermittels eines Gleitmittels (24) in dem Außenring (16') geführt ist.

2. Elektrische Maschine nach Patentanspruch 1, **dadurch gekennzeichnet, dass** die gleitende Führung reibungsarm erfolgt.

3. Elektrische Maschine nach Patentanspruch 2, **dadurch gekennzeichnet, dass** ein Gleitmittel (24) zwischen den Ringen (16,16',22,22',26) eingesetzt wird.

4. Elektrische Maschine nach Patentanspruch 2, **dadurch gekennzeichnet , dass** die Ringe (16,16',22, 22',26) mit einer Gleitschicht versehen sind.

## Claims

1. Electrical machine, having a stator (10) and a shaft (12) which can rotate therein and is guided by magnetic bearings, with safety bearings (14') being provided in the event of failure of the magnetic bearings, which safety bearings (14') then hold the shaft (12) and guide it while its movement is being brought to rest, wherein the safety bearing (14') comprises an outer ring (16') which is mounted on the stator in which a rotatable ring (22', 26) is guided in a sliding manner, wherein the outer ring (16') has a U-shaped profile and one limb of the U-profile is formed by a removable annular web (20'),
**characterized in that**
the outer ring (16') is mounted on the stator (10) via spring and damper elements (18), wherein the rotatable ring is an intermediate ring (26) in which an inner ring (22'), which surrounds the shaft (12) with radial play, is guided in a sliding manner, wherein the intermediate ring (26) is initially arranged in the U-profile of the outer ring (16') and is guided in a sliding manner by means of a sliding means (24) in the outer ring (16').

2. Electrical machine according to Patent Claim 1, **characterized in that** the sliding guide has little friction.

3. Electrical machine according to Patent Claim 2, **characterized in that** a sliding means (24) is inserted between the rings (16, 16', 22, 22', 26).

4. Electrical machine according to Patent Claim 2, **characterized in that** the rings (16, 16', 22, 22', 26) are provided with a sliding layer.

## Revendications

1. Machine électrique, comprenant un stator ( 10 ) et un arbre ( 12 ), qui y est monté tournant et qui est guidé sur des paliers magnétiques, dans lequel, dans le cas d'une défaillance des paliers magnétiques, il est mis à disposition des paliers ( 14' ) de sécurité, qui prennent alors l'arbre ( 12 ) et qui le guident lors du passage de son mouvement à l'état de repos, dans laquelle le palier ( 14' ) de sécurité comprend un anneau ( 16' ) extérieur, qui est monté sur le stator et dans lequel est guidé à glissement un anneau ( 22' , 26 ) tournant, l'anneau ( 16' ) extérieur ayant un profil en forme de U et une branche du profil en U étant formée par une entretoise ( 20' ) annulaire pouvant être retirée,
**caractérisée**
**en ce que** l'anneau ( 16' ) extérieur est monté sur le stator ( 10 ) par des éléments ( 18 ) de ressort et d'amortisseur, l'anneau tournant étant un anneau ( 26 ) intermédiaire, dans lequel un anneau ( 22' ) intérieur est guidé à glissement, anneau qui entoure l'arbre ( 12 ) avec jeu radial, dans laquelle, dans le profil en U de l'anneau ( 16' ) extérieur, est disposé d'abord l'anneau ( 26 ) intermédiaire, qui est guidé à glissement à l'aide d'un lubrifiant ( 24 ) dans l'anneau ( 16' ) extérieur.

2. Machine électrique suivant la revendication 1, **caractérisée en ce que** le guidage à glissement s'effectue avec peu de frottement.

3. Machine électrique suivant la revendication 2, **caractérisée en ce qu'**on utilise un lubrifiant ( 24 ) entre les anneaux ( 16, 16' , 22, 22' , 26 ).

4. Machine électrique suivant la revendication 2, **caractérisée en ce que** les anneaux ( 16, 16', 22, 22', 26 ) sont pourvus d'une couche de glissement.
